# EUROPÄISCHE PATENTSCHRIFT

(11) **EP 2 282 633 B1**
(45) Veröffentlichungstag und Bekanntmachung des Hinweises auf die Patenterteilung: **13.03.2019**
(21) Anmeldenummer: 09742083.0
(22) Anmeldetag: 06.05.2009
(51) Int. Cl.: A01N 25/12, A01N 47/24, A01N 43/653, A01N 47/38

(54) **VERFAHREN ZUR HERSTELLUNG VON PARTIKELN ENTHALTEND AGROCHEMISCHE WIRKSTOFFE IN AMORPHER FORM**
METHOD FOR MANUFACTURING PARTICLES CONTAINING AGRO-CHEMICAL INGREDIENTS IN AN AMORPHOUS FORM
PROCÉDÉ DE FABRICATION DE PARTICULES CONTENANT DES SUBSTANCES AGROCHIMIQUES SOUS FORME AMORPHE

(30) Priorität: 09.05.2008 EP 08155959
(43) Veröffentlichungstag der Anmeldung: 16.02.2011
(73) Patentinhaber: BASF SE, 67056 Ludwigshafen am Rhein (DE)
(72) Erfinder: TROPPMANN, Ulrike, 68163 Mannheim (DE); MAYER, Winfried, 55270 Bubenheim (DE); KOLTZENBURG, Sebastian, 67125 Dannstadt-Schauernheim (DE); ISRAELS, Rafel, 50674 Köln (DE); BAUDER, Andreas, 68199 Mannheim (DE); SCHLOTTERBECK, Ulf, 68165 Mannheim (DE)
(74) Vertreter: BASF IP Association
(86) Internationale Anmeldenummer: PCT/EP2009/055458
(87) Internationale Veröffentlichungsnummer: WO 2009/135865

(56) Entgegenhaltungen:
- WO-A-96/27290
- WO-A-03/034822
- WO-A-2006/111327

## Beschreibung

Gegenstand der vorliegenden Erfindung ist ein Verfahren zur Herstellung von Partikeln, welche zwei agrochemischen Wirkstoffe in amorpher Form enthalten, bei dem eine Schmelze umfassend die beiden geschmolzenen agrochemischen Wirkstoffe in einer wässerigen Lösung emulgiert und abgekühlt wird. Ein weiterer Gegenstand ist die Verwendung eines agrochemischen Wirkstoffs zur Inhibierung der Kristallisation eines anderen agrochemischen Wirkstoffs in einem Herstellverfahren von Partikeln, welche die beiden agrochemischen Wirkstoffe in amorpher Form enthalten, bei dem eine Schmelze umfassend die beiden geschmolzenenen agrochemischen Wirkstoffe in einer wässerige Lösung emulgiert und abgekühlt wird. Ein weiterer Gegenstand betrifft Partikel, welche zwei agrochemischen Wirkstoffe in amorpher Form enthalten. Des weiteren betrifft ein Gegenstand ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen. Ein weiterer Gegenstand betrifft ein Verfahren zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchses. Schließlich betrifft ein Gegenstand Saatgut, das mit der agrochemischen Formulierung gebeizt wurde. Kombinationen bevorzugter Merkmale mit anderen bevorzugten Merkmalen werden von der vorliegenden Erfindung umfasst.

Bei der Herstellung von Formulierungen von Pflanzenschutzwirkstoffen zu Suspensionen oder Suspoemulsionen werden üblicherweise eine oder mehrere Wirkstoffkomponenten in einem Ansatzkessel mit Hilfe eines Rührorganes in wässerige Lösungen eindispergiert. Anschließend wird der Rohansatz fein zerkleinert. Je nach gewünschter Feinheit und Mahlbarkeit der Einsatzstoffe erfolgt die weitere Zerkleinerung mit speziellen Mühlen. Je nach Mahlbarkeit der Wirkstoffe werden unterschiedliche Mahldauern für die Zerkleinerung benötigt.

Falls ein Wirkstoffgemisch formuliert werden soll, richtet sich die erforderliche Mahldauer bei einer solchen Covermahlung nach der am schlechtesten mahlbaren Komponente. In ungünstigen Fällen kann während der Zeit, die zur Vermahlung der härtesten Komponente benötigt wird, eine Übermahlung empfindlicher Wirkstoffe, das heißt, eine Produktschädigung, auftreten. Bei der Zerkleinerung von Einsatzstoffen mit unterschiedlicher Mahlbarkeit kann es daher vorteilhaft sein, die Einsatzstoffe getrennt von einander zu vermahlen oder zu emulgieren, und erst danach eine Mischung der Wirkstoffsuspensionen bzw. Wirkstoffemulsionen herzustellen. Charakteristisch für solche Mischungen ist, dass die Wirkstoffkomponenten weitgehend separat voneinander in den Suspensionspartikeln oder Emulsionstropfen vorliegen.

Beispielsweise liegt Epoxiconazol in verschiedenen Formulierungen in Mischungen mit anderen agrochemischen Wirktstoffen vor. Wegen des hohen Schmelzpunktes von Epoxiconazol (135°C) ist eine Zerkleinerung der Schmelze in wässrigen Systemen in Form einer Schmelzeemulgierung nicht ohne weiteres möglich.

WO 2006/111327 offenbart beispielweise eine Zubereitung enthaltend eine Mischung von einem Conazol mit einem weiteren Pflanzenschutzwirkstoff sowie einem Copolymer, welches ein monoethylenisch ungesättigtes Monomer umfasst, das eine Sulfonsäuregruppe aufweist. Dieses Copolymer ist notwendig, da es die Stabilisierung des Wirkstoffs in der wässrigen Phase bewirkt und ist in die Schmelze der Wirkstoffe enthalten.

Viele Wirkstoffe treten nach der Synthese und der Feststoffbildung in kristalliner Modifikation mit unbefriedigender oder schlechter biologischer Aktivität auf. Durch die oben beschriebenen Zerkleinerungsmechanismen wird nur die Größe der Kristalle reduziert und damit die Bioverfügbarkeit kaum verbessert. Außerdem kann das Zerkleinerungsergebnis bei ungenügender Stabilisierung des Systems durch Reifungseffekte der kristallinen Partikel beeinträchtigt oder rückgängig gemacht werden.

Verfahren zur Herstellung von Partikeln, welche zwei agrochemischen Wirkstoffe in amorpher Form enthalten, bei dem eine Schmelze umfassend die beiden geschmolzenen agrochemischen Wirkstoffe in einer wässerigen Lösung emulgiert und abgekühlt wird, sind bekannt.

EP 1 060 667 B1 offenbart ein Herstellverfahren für Suspensionskonzentrate kristalliner Pestizidmischungen umfassend das Kombinieren einer Pestizidschmelze mit einem Lösungsmittelstrom. Kristallisationsbeschleuniger oder-inhibitoren können zugesetzt werden.

EP 0 249 075 B1 offenbart ein Herstellverfahren für wässerige Suspensionskonzentrate von Pendimethalin. Dabei wird die wässerige Dispersion von geschmolzenem Pendimethalin mit 0 bis 50 Gewicht zu Volumen-% mindestens eines sekundären Pestizids versetzt und gemahlen.

EP 0 145 879 B1 offenbart ein Herstellverfahren für wässerige Pflanzenschutzmittel Dispersionen, die einen oder mehrere Wirkstoffe enthalten können. Dabei wird ein geschmolzener Wirkstoff in den Austrittsstrahl einer Düse eindosiert, der eine wässerige Lösung enthält.

WO 95/05164 offenbart eine Schmelzemulgierung schwerlöslicher Wirkstoffe und deren Mischungen zur Herstellung amorpher Partikel. Bei dem Verfahren können Kristallisationsinhibitoren eingesetzt werden.

Außerdem offenbart WO 1996/27290 den Einsatz eines fungiziden Triazols in einer wirksamen Menge um die kristallisation von 5-Methyl-5-(4-phenoxyphenyl)-3-(phenylamino)-2,4-oxazolidindion zu inhibieren.

WO2003/034822 beschreibt die Beschichtung amorpher Partikeln mittels Polyvinylalkohol um die Kristallbildung zu Hemmen. Aufgabe der vorliegenden Erfindung war es, ein neues Verfahren zur Herstellung von Partikel, die zwei agrochemische Wirkstoffe in amorpher Form umfassen, zu entwickeln. Das neue Verfahren sollte die Herstellung einer agrochemischen Formulierung ermöglichen, die eine höhere und/oder schnellere biologische Wirksamkeit hat als herkömmliche Formulierung. Des weiteren war es Aufgabe, dass die Formulierung weitgehend frei von herkömmlichen, besonders polymeren Kristallisationsinhibitoren sein sollte, damit die Formulierung möglichst umweltverträglich ist. Ein weiterer Aspekt der Aufgabe war es, feste, wenig wasserlösliche agrochemische Wirkstoffe so zu formulieren, dass sie eine höhere und/oder schnellere biologische Wirksamkeit haben, als sie herkömmliche Formulierungen zeigen. Des weiteren war es Aufgabe, Mischungen von Pyraclostrobin und Epoxiconazol mit hoher und/oder schneller biologischer Wirksamkeit zu formulieren. Eine weitere Aufgabe war was, stabile, wässerige Formulierungen umfassend Prochloraz bereitzustellen.

Die Aufgabe wurde gelöst durch ein Verfahren zur Herstellung von Partikeln, welche zwei agrochemischen Wirkstoffe in amorpher Form enthalten, bei dem eine Schmelze umfassend die beiden geschmolzenen agrochemischen Wirkstoffe in einer wässerigen Lösung emulgiert und abgekühlt wird, wobei der eine agrochemische Wirkstoff die Kristallisation des anderen agrochemischen Wirkstoffs inhibiert.

Im Allgmeinen enthalten die Partikel zwei agrochemische Wirkstoffe. Üblicherweise handelt es sich dabei um zwei unterschiedliche Wirkstoffe. Die Partikel können auch drei oder noch mehr Wirkstoffe enthalten. Bevorzugt enthalten die Partikel genau zwei Wirkstoffe. In einer weiteren Ausführungsform könne die Partikel unverkapselt sein. Das bedeutet, sie sind frei von einer polymeren Umhüllung.

Unter Partikel versteht man im Allgemeinen Teilchen, die bei 20 °C fest sind. Die Partikel können je nach Verwendung unterschiedliche Größe oder Größenverteilung aufweisen. Die Partikel haben im Allgemeinen eine Partikelgrößenverteilung mit einem x₅₀-Wert von 0,05 µm bis 10 µm, bevorzugt 0,2 µm bis 5 µm und besonders bevorzugt von 0,5 µm bis 2 µm. Die Partikelgrößenverteilung kann durch Laserlichtbeugung einer wässerigen Suspension umfassend die Partikel bestimmt werden. Die Probenvorbereitung, beispielsweise die Verdünnung auf Messkonzentration, hängt bei diesem Messverfahren unter anderem von der Feinheit und Konzentration der Wirkstoffe in der Suspensionsprobe sowie vom verwendeten Messgerät ab. Die Vorgehensweise muss für das jeweilige System ausgearbeitet werden und ist dem Fachmann bekannt.

Amorph bedeutet, dass die molekularen Bausteine eines homogenen Festkörpers nicht in Kristallgittern angeordnet sind. Eine amorphe Form eines Wirkstoffs bedeutet, dass er weitgehend frei von kristallinem Material ist, wobei bevorzugt von 80 bis 100 Gew.%, insbesondere von 90 bis 100 Gew.% des Materials amorph vorliegen. Amorphe Formen können von kristallinen Formen unterschieden werden durch verschiedene Methoden, beispielsweise durch mikroskopische Untersuchung in polarisiertem Licht, Differential Scanning Kalorimetrie, Röntgenbeugung oder Löslichkeitsvergleiche. Die Wahl der Methode richtet sich beispielsweise nach der Feinheit der Partikel. So kann eine lichtmikroskopische Untersuchung in polarisiertem Licht nur dann durchgeführt werden, wenn ein wesentlicher Teil der Partikel so groß ist, dass sie noch vom Mikroskop aufgelöst werden können, das heißt in einem Bereich oberhalb von etwa 1 µm. Die Bestimmung inwieweit eine amorphe Form vorliegt, erfolgt nach Ende des erfindungsgemäßen Herstellverfahrens, insbesondere nachdem die Feinemulsion hergestellt und abgekühlt wurde. Möglicherweise verändert sich die Form der Partikel nach der Herstellung, so dass die Bestimmung bevorzugt innerhalb einer Stunde, besonders bevorzugt 24 h, insbesondere 72 h erfolgt.

Die amorphe Form von Epoxiconazol oder von Pyraclostrobin kann beispielsweise von der kristallinen Form unterschieden werden durch mikroskopische Untersuchung einer wässerigen Suspension in polarisiertem Licht. Hierzu muss die Originalsuspension in Abhängigkeit von der Ausgangskonzentration und der Feinheit des Wirkstoffes mit VE-Wasser verdünnt werden, damit sich die Partikel auf dem Objektträger möglichst vereinzelt präparieren lassen. Beispielsweise muss eine zehnprozentige Wirkstoffformulierung mit einer mittleren Partikelgrößevon etwa 1 bis 2 µm etwa um Faktor 60 bis 80 verdünnt werden. Der Verdünnungsschritt und auch die Analyse wird normalerweise bei Raumtemperatur durchgeführt. Dabei erscheinen die amorphen Partikel als sphärische Teilchen, während kristalline Partikel zum Beispiel als eckige oder rechtwinklige Kristalle oder auch als Nadeln erscheinen.

Erfindungsgemäß inhibiert der eine agrochemische Wirkstoff die Kristallisation des anderen agrochemischen Wirkstoffs. Die Eigenschaft eines Wirkstoffs die Kristallisation eines oder mehrerer anderer Wirkstoffe zu inhibieren, kann in einfachen Vorversuchen festgestellt werden. Dazu werden die Wirkstoffe in verschiedenen Mengen, bevorzugt im Bereich von 1 bis 100 g, miteinander vermischt und durch Erwärmen über den Schmelzpunkt der Mischung in eine homogene Schmelze überführt. Danach läßt man die Schmelze abkühlen, bevorzugt durch stehen lassen der Schmelze bei Raumtemperatur. Nach Abkühlen der Schmelze, bevorzugt eine Stunde nach Abkühlen auf Raumtemperatur, kann man mit Hilfe eines Lichtmikroskopes oder dynamischer Differenzkalorimetrie (DSC) feststellen, ob die erstarrte Schmelze Kristalle enthält. Bevorzugt wird die DSC Analyse. Im Allgemeinen wird dazu eine Probe in einem Aluminium Tiegel einmal mit einer Heizrate von 5 bis 20, bevorzugt 10 K/min erhitzt. Die Starttemperatur liegt üblicherweise 50 °C unter dem erwarteten Schmelzpunkt und die Endtemperatur 20 °C darüber. Weitere Grundlagen der DSC-Messung richten sich nach der DIN 51004 (Juni 1994) "Bestimmung der Schmelztemperaturen kristalliner Stoffe mit der Differenzthermoanalyse".

Wird ein Schmelzbereich von mindestens 10 °C, bevorzugt mindestens 20 °C und insbesodere mindestens 30 °C gefunden, ist die kristallisationsinhibierende Eigenschaft festgestellt. Alternativ kann die kristallisationsinhibierende Eigenschaft festgestellt werden, wenn die Mischung der Wirkstoffe beim Aufheizen keine Phasenumwandlungen erster Ordnung mehr zeigt. Diese Phasenumwandlungen zeigen sich in einem typischen DSC-Plot als Peaks. Amorphe Phasen zeigen im Idealfall in der DSC keine Peaks, sondern nur eine Phasenumwandlung zweiter Ordnung in Form einer Stufe, die als Glasübergangstemperatur bezeichnet wird. Im Gegensatz zu diesem idealen Verhalten kann man aufgrund von lokaler Überstrukturbildung auch in den DSC-Plots amorpher Phasen Peaks finden, insbesondere in der Umgebung der Glasübergangstemperatur. Zur Entscheidung, ob eine Mischphase amorph ist, ist es daher wesentlich, dass im Bereich der Schmelzpunkte der reinen Wirkstoffe keine Peaks mehr vorhanden sind, oder aber höchstens wesentlich kleinere Peaks mit einer Fläche, die maximal 10% der Fläche des Kristallisationspeaks des reinen Wirkstoffs entspricht.

Als Alternative zum Erwärmen über den Schmelzpunkt der Mischung kann man die Wirkstoffe separat in einem geeigneten Lösungsmittels lösen, die Wirkstoff-haltigen Lösungen vermischen, und anschließend die Lösungsmittel entfernen. Die weitere Analyse auf Kristalle erfolgt wie oben beschrieben. Es können ein oder mehrere verschiedenen Lösungsmittel eingesetzt werden, um den jeweiligen Wirkstoff zu lösen. Bevorzugt werden Lösungsmittel eingesetzt, in denen der jeweilige Wirkstoff zu mindestens 10 Gew.% bei 20 °C löslich ist. Die Lösungsmittel haben meist einen Siedepunkt von unter 100 °C, bevorzugt unter 70 °C bei 1013 mbar. Die Lösungsmittel können bei Temperaturen von bis zu 100 °C, bevorzugt bis zu 60 °C, und besonders bevorzugt bis zu 30 °C entfernt werden.

Bevorzugtes Verfahren ist das Erwärmen über den Schmelzpunkt der Mischung.

In einer weiteren bevorzugten Ausführungsform wird die Kristallisation inhibierende Wirkung des eines agrochemischen Wirkstoffs auf den anderen agrochemischen Wirkstoff festgestellt wird, indem man
a) die Wirkstoffe miteinander vermischt, durch Erwärmen über den Schmelzpunkt der Mischung in eine homogene Schmelze überführt, und die Schmelze abkühlen läßt,; oder
b) die Wirkstoffe separat in einem Lösungsmittels löst, die Wirkstoff-haltigen Lösungen vermischt, und anschließend das Lösungsmittel entfernt;
und anschließend mit Hilfe eines Lichtmikroskopes oder dynamischer Differenzkalorimetrie (DSC) feststellt, ob die erstarrte Schmelze oder die getrocknete Mischung Kristalle enthält.

Der Begriff agrochemischer Wirkstoff bzw. Pestizid bezeichnet hier einen Wirkstoff ausgewählt aus der Gruppe Metconazol, Pyraclostrobin, Epoxiconazol, Prochloraz, Triticonazol, Boscalid, 3-Difluormethyl-1-methyl-1H-pyrazol-4-carbonsäure (3',4',5'-trifluorbiphenyl-2-yl)-amid oder Metalaxyl.

Das Gewichtsverhältnis, in denen die agrochemischen Wirkstoffe eingesetzt können, orientiert sich üblicherweise an der kristallisationsinhibierenden Wirkung des als Kristallisationsinhibitor eingesetzten agrochemischen Wirkstoffs. Hat sich beispielsweise in den oben erwähnten Vorversuchen gezeigt, dass bei einem bestimmten Gewichtsverhältnis Kristallisatinsinhibierung auftritt, sind ist dieses Gewichtsverhältnis geeignet. Bevorzugt liegt der kristallisationsinhibierende Wirkstoff zu mindestens 5 Gew.%, speziell zu mindestens 10 Gew.% bezogen auf die Gesamtwirkstoffmenge vor. Bevorzugt liegt jeder der Wirkstoffe zu mindestens 5 Gew.%, speziell zu mindestens 10 Gew.% bezogen auf die Gesamtwirkstoffmenge vor. Besonders bevorzugt liegen die agrochemischen Wirkstoffe Pyraclostrobin und Epoxiconazol im Gewichtsverhältnis 5: 95 bis 95:5, insbesondere 10 : 90 bis 90 : 10 und speziell 50 : 50 bis 90 : 10, oder Pyraclostrobin und Prochloraz im Gewichtsverhältnis 5: 95 bis 95:5, insbesondere 10 : 90 bis 90 : 10 und speziell 10 : 90 bis 50 : 50 vor. In einer weiteren besonders bevorzugten Ausführungsform liegen die agrochemischen Wirkstoffe Pyraclostrobin und Metalaxyl im Gewichtsverhältnis 90 : 10 bis 30:70, insbesondere 80 : 20 bis 40 : 60 und speziell 70 : 30 bis 50 : 50 vor. In weiteren Ausführungsformen liegen folgende Wirkstoffe in folgenden Gewichtsverhältnissen vor:
- Prochloraz und Triticonazol: 95 : 5 bis 50 : 50, insbesondere 90 : 10 bis 70 : 30 und speziell 85 : 15 bis 75 : 25;
- Pyraclostrobin und Metconazol: 95 : 5 bis 20 : 80, insbesondere 90 : 10 bis 30 : 70 und speziell 85 : 15 bis 35 : 65;
- Pyraclostrobin und Boscalid: 95 : 5 bis 50 : 50, insbesondere 90 : 10 bis 70 : 30 und speziell 85 : 15 bis 75 : 25;
- Pyraclostrobin und Metalaxyl: 95 : 5 bis 20 : 80, insbesondere 90 : 10 bis 30 : 70 und speziell 85 : 15 bis 35 : 65;
- Triticonazol und Epoxiconazol: 80 : 20 bis 20 : 80, insbesondere 70 : 30 bis 30 : 70 und speziell 65 : 35 bis 35 : 65;
- Triticonazol und Metalaxyl: 40 : 80 bis 5 : 95, insbesondere 30 : 70 bis 10 : 90 und speziell 25 : 75 bis 15 : 85;
- Epoxiconazol und Metconazol: 60 : 40 bis 5 : 95, insbesondere 50 : 50 bis 10 : 90 und speziell 45 : 55 bis 15 : 85;
- Epoxiconazol und Boscalid: 60 : 40 bis 20 : 80, insbesondere 50 : 50 bis 30 : 70 und speziell 45 : 55 bis 35 : 65;
- 3-Difluormethyl-1-methyl-1H-pyrazol-4-carbonsäure (3',4',5'-trifluorbiphenyl-2-yl)-amid und Triticonazol: 60 : 40 bis 20 : 80, insbesondere 50 : 50 bis 30 : 70 und speziell 45 : 55 bis 35 : 65;
- 3-Difluormethyl-1-methyl-1H-pyrazol-4-carbonsäure (3',4',5'-trifluorbiphenyl-2-yl)-amid und Metconazol: 30 : 70 bis 5 : 95, insbesondere 40 : 60 bis 10 : 90 und speziell 45 : 55 bis 15 : 85;
- Pyraclostrobin, Metalaxyl und Triticonazol: in einer Ausführungsform 20 : 75 : 5 bis 20 : 40 : 40, insbesondere 20 : 70 : 10 bis 20 : 50 : 30; in einer weiteren Ausführungsform 40 : 40 : 20 bis 5 : 75 : 20, insbesondere 30 : 50 : 20 bis 10 : 70 : 20; in einer weiteren Ausführungsform 35 : 60 : 5 bis 5 : 60 : 35, insbesondere 30 : 60 : 10 bis 10 : 60 : 30.

In einer bevorzugten Ausführungsform werden agrochemische Wirkstoffe eingesetzt, die in Wasser schwerlöslich, d. h., die bei 20 °C in Wasser höchstens 1 Gew.%, besonders bevorzugt höchstens 0,1 Gew. % und ganz speziell höchstens 0,01 % löslich sind. In einer weiteren bevorzugten Ausführungsform ist mindestens einer der Wirkstoffe bei 20 °C in Wasser zu höchstens 1 Gew.%, löslich und mindestens ein anderer Wirkstoff zu höchstens 0,1 Gew.%, bevorzugt höchstens 0,01 Gew.%.

Die eingesetzten agrochemischen Wirkstoffe sind üblicherweise Feststoffe bei 20 °C. Der Schmelzpunkt der Wirkstoffe liegt bei mindestens 40 °C. In einer weiteren Ausführungsform hat mindestens einer der Wirkstoffe einen Schmelzpunkt von höchstens 170 °C, bevorzugt höchstens 150 °C, besonders bevorzugt höchstens 110 °C. Üblicherweise hat mindestens einer der Wirkstoffe einen Schmelzpunkt von 40 bis 110 °C, bevorzugt 40 bis 90 °C und speziell 40 bis 70 °C.

Die vorliegende Erfindung betrifft ein Verfahren zur Herstellung von Partikeln, welche zwei agrochemischen Wirkstoffe in amorpher Form enthalten, bei dem eine Schmelze umfassend die beiden geschmolzenen agrochemischen Wirkstoffe in einer wässerigen Lösung emulgiert und abgekühlt wird, wobei der eine agrochemische Wirkstoff die Kristallisation des anderen agrochemischen Wirkstoffs inhibiert.

In einer bevorzugten Ausführungsform kann die Schmelze in einer wässerigen Lösung emulgiert werden, indem mindestens zwei agrochemische Wirkstoff aufgeschmolzen werden und diese Schmelze in die wässerige Lösung eingebracht wird. Dazu kann ein Wirkstoff mit einem niedrigen, bevorzugt dem niedrigsten Schmelzpunkt oder Schmelzbereich erhitzt und aufgeschmolzen werden. In dieser Schmelze kann ein zweiter und gegebenenfalls ein weiterer Wirkstoff gelöst oder geschmolzen werden, so daß eine Schmelze umfassend eine Wirkstoffmischung entsteht. Die Schmelze des ersten Wirkstoffs dient üblicherweise als Lösemittel für den oder die weiteren Wirkstoff(e). Danach wird die Schmelze in die wässerige Lösung eingebracht, bevorzugt unter Zufuhr von Energie. Beispielsweise kann Energie eingebracht werden durch Schütteln, Rühren, tubulentes Mischen, Einspritzen einer Flüssigkeit in eine andere, Schwingungen und Kavitation der Mischung (z.B. mit Ultraschall), Emulgierzentrifugen, Kolloidmühlen, Zahnkranzdispergiermaschinen oder Homogenisatoren. Im Allgemeinen beträgt die Temperaturdifferenz zwischen Schmelze und wässeriger Phase 0 bis 200 °C. Bevorzugt ist die Schmelze von 20 bis 200 °C wärmer als die wässerige Phase. Unter Umständen müssen diese Prozesse in Druckapparaturen durchgeführt werden, da der Dampfdruck der kontinuierlichen Phase durch die Temperaturerhöhung ansteigt und auch oberhalb des Umgebungsdruckes liegen kann.

In einer weiteren bevorzugten Ausführungsform kann die Schmelze in einer wässerigen Lösung emulgiert werden, indem mindestens zwei Wirkstoffe unter Zufuhr von Energie direkt in einer wässerigen Lösung aufgeschmolzen werden

In der vorgenannten Ausführungsform kann sowohl die kontinuierliche Phase umfassend die wässerige Lösung wie auch die disperse Phase umfassend die geschmolzenen agrochemischen Wirkstoffe mit den entsprechend für die Formulierung und die spätere Anwendung erforderlichen Hilfsstoffen, wie Tensiden, versetzt sein.

Sobald die kontinuierliche Phase umfassend die wässerige Lösung und die disperse Phase umfassend die geschmolzenen agrochemischen Wirkstoffe miteinander vereinigt und grobdispers voremulgiert sind, spricht man von einer Rohemulsion. Die Rohemulsion kann dann in einer Emulgierapparatur behandelt werden, wobei die Dispersphasentropfen fein zerkleinert werden (sog. Feinemulgierung). Der Prozessschritt des Feinemulgierens kann diskontinuierlich, beispielsweise in einem Rührbehälter, oder kontinuierlich durchgeführt werden. Kontinuierlich arbeitende Maschinen und Apparaturen zur Emulgierung sind dem Fachmann bekannt. Beispiele sind Kolloidmühlen, Zahnkranzdispergiermaschinen und andere Bauformen dynamischer Mischer, weiterhin Hochdruckhomogenisatoren, Pumpen mit nachgeschalteten Düsen, Ventilen, Membranen oder sonstigen engen Spaltgeometrien, statische Mischer, In-line Mischer nach dem Rotor-Stator-Prinzip (Ultra-Turrax, Inline Dissolver), Mikromischsysteme sowie Ultraschall-Emulgiersysteme. Bervorzugt werden Zahnkranzdispergiermaschinen oder Hochdruckhomogenisatoren eingesetzt.

Nach dem Feinemulgieren kann die Feinemulsion unter den Schmelzpunkt oder Schmelzbereich des Wirkstoffes abgekühlt werden. Dieser Schritt kann durch Abkühlen unter Rühren (Batchfahrweise) erfolgen oder indem die Feinemulsion durch einen Wärmetauscher geleitet wird (kontinuierliche Fahrweise). Dabei erstarren die agrochemischen Wirkstoffe in der Dispersphase in partikulärer amorpher Form.

Erfindungsgemäß wird die in einer wässerigen Lösung eingebrachte Schmelze mit einer Kühlrate von mindestens 0,5 K/min abgekühlt mit Hilfe einer regelbaren Kühlapparatur. Beispielsweise umfasst eine regelbare Kühlapparatur ein Rohr, das gekühlt werden kann und durch das die zu kühlende Stoffe fliessen. So kann durch die Fliessgeschwindigkeit und / oder die Temperatur des gekühlten Rohres die Kühlrate geregelt werden.

Die Abkühlung erfolgt im Allgemeinen bis unter den Schmelzpunkt der kristallinen Form der agrochemischen Wirkstoffe, bevorzugt auf unter 50 °C, besonders bevorzugt auf unter 30 °C.

Das erfindungsgemäße Verfahren führt im Allgemeinen zu einer wässerige Suspension umfassend mindestens 5 Gew.%, bevorzugt mindestens 15 Gew.% und besonders bevorzugt mindestens 20 Gew.% Partikel, welche die agrochemische Wirkstoffe in amorpher Form umfassen, jeweils bezogen auf die wässerige Suspension. Die durch das erfindungsgemäße Verfahren hergestellte Partikel können verdünnt werden oder so wie sie sind weiter verwendet werden. Außerdem ist es möglich die wässerige Suspension einzuengen oder zu trocknen, beispielsweise durch Sprühtrocknung. In einer bevorzugten Ausführungsform wird die wässrige Suspension als Suspension weiterverwendet. Das erfindungsgemäße Verfahren erfolgt dabei ohne einen Trocknungsschritt.

Optional können weitere Formulierungshilfmittel zur Schmelze, zur wässerigen Lösung oder zur wässerigen Suspension der Partikel zugesetzt werden. Formulierungshilfsmittel sind beispielsweise Lösungsmittel, Tenside, anorganischen Emulgatoren (sog. Pickering-Emulgatoren), Antischäumungsmittel, Verdicker, Frostschutzmittel, sowie Bakterizide. Für die Saatgutbeize gedachte Formulierungen können zusätzlich noch Kleber sowie gegebenenfalls Pigmente enthalten.

Lösungsmittel können der Schmelze und/oder der wässerigen Lösung und/oder der Suspension der Partikel zugesetzt werden. Zur wässerigen Lösung werden im Allgemeinen wasserlösliche Lösungsmittel zugesetzt. Die Wasserlöslichkeit beträgt bevorzugt mindestsns 30 g/L, speziell mindestens 100 g/L Wasser. Das wasserlösliche Lösungsmittel wird üblicherweise höchstens zu 30 Gew.%, besonders bevorzugt zu höchstens 10 Gew.%, insbesondere zu höchstens 3 Gew.% und ganz speziell zu höchstens 0,5 Gew. zugesetzt, bezogen auf die Wassermenge. Die Frostschutzmittel werden in diesem Zusammenhang nicht als wasserlösliche Lösungsmittel verstanden. Zur Schmelze werden im Allgemeinen wasserunlösliche Lösungsmittel zugesetzt. Die Wasserlöslichkeit beträgt bevorzugt höchstens 100 g/L, speziell höchstens 30 g/L Wasser. Geeignete Lösungsmittel sind beispeilsweise Aromaten, Aliphaten, Fettsäureester, Fettsäuredialkylamide oder pflanzliche Öle. Das wasserunlösliche Lösungsmittel wird üblicherweise höchstens zu 50 Gew.%, besonders bevorzugt zu höchstens 30 Gew.% zugesetzt, bezogen auf die Gesamtmenge agrochemischer Wirkstoffe. Zur Suspension der Partikel können die oben genannten wasserlöslichen oder wasserunlöslichen Lösungsmittel zugesetzt werden in den genannten Mengen.

Im Allgemeinen werden anionische, kationische und/oder nichtionische Tenside zugesetzt. Selbstverständlich müssen im Falle der Verwendung von Gemischen von Tensiden die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche nichtionische Tenside sind beispielsweise ethoxylierte Mono-, Di- und Tri-Alkylphenole (Ethoxilierungsgrad von 3 bis 50, Alkylrest: C₄ bis C₁₂) sowie ethoxylierte Fettalkohole (Ethoxilierungsgrad von 3 bis 80; Alkylrest: C₈ bis C₃₆). Beispiele hierfür sind die Lutensol® A-Marken (C₁₂ bis C₁₄-fettalkoholethoxylate, Ethoxilierungsgrad von 3 bis 8), Lutensol® AO-Marken (C₁₃ bis C₁₅-Oxoalkoholethoxylate, Ethoxilierungsgrad von 3 bis 30), Lutensol® AT-Marken (C₁₆ bis C₁₈-Fettalkoholethoxylate, Ethoxilierungsgrad von 11 bis 80), Lutensol® ON-Marken (C₁₀-Oxoalkoholethoxylate, Ethoxilierungsgrad von 3 bis 11) und die Lutensol® TO-Marken (C₁₃-Oxoalkoholethoxylate, Ethoxilierungsgrad von 3 bis 20) der BASF SE. Weiterhin geeignet sind amphiphile Polymere, beispielsweise wie in EP 1 756 188 B1, Absatz [0012] bis [0068], oder in DE 10 2006 001 529 A1, Absatz [0025] bis [0055], beschrieben oder auf Basis der Monomeren Acrylsäure, Butylmethacrylat, Methylmethacrylat, Hydroxyethylmethacrylat und/oder iso-Butylmethacrylat. Geeignet sind auch amphiphile Blockpolymere, insbesondere auf Basis Ethylenoxid-Propylenoxid. Beispiele sind Pluronic® PE Marken (EO-PO-EO Triblockpolymere; EO: Ethylenoxid, PO: Propylenoxid). Geeignet sind auch Kammpolymere, besonders auf Basis von Alkoxypolyoxyalkylen(meth)acrylaten, wie Kammpolmyere aus Methylmethacrylat, Methacrylsäure und (Methoxypolyethylenglykol)methacrylat (kommerziell erhältlich als Atlox® 4913 von Uniqema). Gebräuchlich sind auch Polysaccharide und deren Derivate, bevorzugt Polysaccharide auf Basis Inulin, beispielsweise Inutec® SP1 (Inulin aus Chicoree mit aufgepfropften Alkylgruppen).

Übliche anionische Tenside sind z.B. Alkalimetall- und Ammoniumsalze von Alkylsulfaten (Alkylrest: C8 bis C12), beispielsweise Natriumdodecylsulfat, von Schwefelsäurehalbestern ethoxylierter Alkanole (Ethoxilierungsgrad von 4 bis 30, Alkylrest: C₁₂ bis C₁₈) und ethoxylierter Alkylphenole (Ethoxilierungsgrad von 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Als weitere anionische Tenside haben sich ferner Verbindungen der allgemeinen Formel (I) 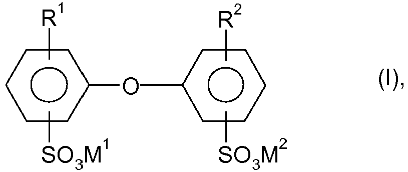 worin R¹ und R² H-Atome oder C₄- bis C₂₄-Alkyl bedeuten und nicht gleichzeitig H-Atome sind, und M¹ und M² Alkalimetallionen und/oder Ammoniumionen sein können, erwiesen. In der allgemeinen Formel (I) bedeuten R¹ und R² bevorzugt lineare oder verzweigte Alkylreste mit 6 bis 18 C-Atomen, insbesondere mit 6, 12 und 16 C-Atomen oder Wasserstoff, wobei R¹ und R² nicht beide gleichzeitig H-Atome sind. M¹ und M² sind bevorzugt Natrium, Kalium oder Ammonium, wobei Natrium besonders bevorzugt ist. Besonders vorteilhaft sind Verbindungen (I), in denen M¹ und M² Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Geeignet sind auch Salze von Dialkylsulphosuccinaten, wie Natriumdioctylsulphosuccinat (kommerziell erhältlich als Lutensit® A-BO von BASF SE). Weiterhin geeignet sind Arylphenolalkoxylate oder deren sulfatierte oder phosphatierte Derivate, besonders ethoxylierte Di- und Tristryrylphenole oder deren sulfatierte oder phosphatierte Derivate, wie Soprophor® von Rhodia (Ammoniumsalz des ethoxylierten Tristyrylphenolsulfats mit etwa 16 Ethylenoxidgruppen pro Molekül). Ebenso geeignet sind teilneutralisierte Alkalisalze von (Meth)Acrylsäure-MaleinsäureCopolymere, beispielsweise die Sokalan®-Marken der BASF, insbesondere Sokalan CP45 (Acrylsäure-Maleinsäure-Copolymerisat, Natriumsalz, teilweise neutralisiert).

Geeignete kationische Tenside sind in der Regel einen C₆- bis C₁₈-Alkyl-, -Alkylaryl- oder heterocyclischen Rest aufweisende kationische Salze, zum Beispiel primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryl-dimethyl)ethylendiamindisulfat, ethoxyliertes Talgfettalkyl-N-methylammoniumsulfat und ethoxyliertes Oleylamin (beispielsweise Uniperol® AC der BASF SE, ca. 12 Ethylenoxideinheiten). Wesentlich ist, dass die anionischen Gegengruppen möglichst gering nucleophil sind, wie beispielsweise Perchlorat, Sulfat, Phosphat, Nitrat und Carboxylate, wie Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die Konzentration des zugesetzten Tensids bzw. deren Mischung kann in weiten Bereichen variieren. Sie hängt stark vom zu emulgierenden Wirkstoff bzw. von der Wirkstoffmischung ab. Üblicherweise werden Konzentrationen von 0,1 bis 30 Gew.%, bezogen auf die wässerige Lösung verwendet.

Beispiele für anorganische Emulgatoren sind Metallsalze, wie Salze, Oxide und Hydroxide von Calcium, Magnesium, Eisen, Zink, Nickel, Titan, Aluminium, Silicium, Barium oder Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt.

Beispiele für Verdicker (Verbindungen, die der Formulierung ein pseudo-plastisches Fließverhalten verleihen, d.h. hohe Viskosität im Ruhezustand und niedrige Viskosität im bewegten Zustand) sind beispielsweise Polysaccharide, wie Xanthan Gum, oder organische Schichtmineralien.

Als Antischaummittel kommen beispielsweise Silikonemulsionen, langkettige Alkohole, Fettsäuren, fluororganische Verbindungen und deren Gemische in Betracht.

Bakterizide können zur Stabilisierung der wäßrigen Formulierung zugesetzt werden. Als Bakterizide, die in den erfindungsgemäßen Formulierungen enthalten sein können, kommen alle zur Formulierung von agrochemischen Wirkstoffen üblichen Bakterizide in Betracht wie zum Beispiel Diclorophen und Benzylalkoholhemiformal.

Geeignete Frostschutzmittel sind beispielsweise mehrwertige Alkohole wie Ethylenglycol, Propylenglycol oder Glycerin, bevorzugt Glycerin. Üblicherweise werden 0 bis 30 Gew.%, bevorzugt 10 bis 20 Gew.% bezogen auf die wässerige Lösung zugesetzt.

Als Kleber, die in Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose. In einer bevorzugten Ausführungsform werden dem erfindungsgemäßen Verfahren oder dem erfindungsgemäßen Partikeln unter 5 Gew.%, bevorzugt unter 1 Gew.%, ganz besonders unter 0,1 Gew.% und insbesondere kein Polyvinylalkohol zugesetzt.

Des weiteren können den erfindungsgemäßen Formulierungen optional auch Farbstoffe zugesetzt werden. Hierbei kommen alle für derartige Zwecke üblichen Farbstoffe in Betracht, beispielsweise C.I. Pigment Red 48:2. Dabei sind sowohl in Wasser wenig lösliche Pigmente als auch in Wasser lösliche Farbstoffe verwendbar.

Kristallisationsinhibitoren, die keine agrochemischen Wirkstoffe sind, brauchen im Allgemeinen nicht zugesetzt werden. Insbesondere der Schmelze umfassend die beiden agrochemischen Wirkstoffe brauchen keine Kristallisationsinhibitoren zugesetzt werden. Bevorzugt werden höchstens 5 Gew.%, besonders bevorzugt höchstens 1 Gew.% und speziell keine Kristallisationsinhibitoren, die keine agrochemischen Wirkstoffe sind, zugesetzt. In einer bevorzugten Ausführungsform werden höchstens 5 Gew.%, bevorzugt höchstens 1 Gew.% und speziell keine polymeren Kristallisationsinhibitoren zugesetzt. Dabei beziehen sich die Gew.% des Kristallisationsinhibitors jeweils auf die Gesamtmenge agrochemischer Wirkstoff. Unter "polymer" werden hier Verbindungen mit mindestens drei wiederkehrenden Monomereinheiten und einer Molmasse von mindestens 800 g/mol, insbesondere mindestens 2000 g/mol verstanden. Ein Beispiel für solche polymeren Kristallisationsinhibitoren ist das in WO 2006/111327 erwähnte Copolymer enthaltend ein monoethylenisch ungesättigtes Monomer, das wenigstens eine Sulfonsäuregruppe aufweist. In einer weiteren bevorzugten Ausführungsform werden der Schmelze umfassend die beiden agrochemischen Wirkstoffe höchstens 5 Gew.%, besonders bevorzugt höchstens 1 Gew.% und speziell keine Copolymer enthaltend ein monoethylenisch ungesättigtes Monomer, das wenigstens eine Sulfonsäuregruppe aufweist, zugesetzt.

Das erfindungsgemäße Verfahren führt üblicherweise zu Partikeln, die frei von einer polymeren Umhüllung sind. Insbesondere führt das Verfahren zu Partikel, die frei von einer Umhüllung enthaltend Polyvinylalkohol sind. Das Verfahren umfasst daher üblicherweise keinen Schritt zur Umhüllung der Partikel mit einem Polymer. Beispielsweise umfasst das Verfahren keine Zugabe einer wässrigen Polymerlösung, wie Polyvinylalkohol, und anschließende Sprühtrocknung.

Ein weiterer Gegenstand der Erfindung ist die Verwendung eines agrochemischen Wirkstoffs zur Inhibierung der Kristallisation eines anderen agrochemischen Wirkstoffs in einem Herstellverfahren von Partikeln, welche die beiden agrochemischen Wirkstoffe in amorpher Form enthalten, bei dem eine Schmelze umfassend die beiden geschmolzenenen agrochemischen Wirkstoffe in einer wässerige Lösung emulgiert und abgekühlt wird. Geeignete Ausführungsformen des Herstellverfahrens und der agrochemischen Wirkstoffe sind wie vorstehend beschrieben. Bevorzugt ist mindestens einer der agrochemischen Wirkstoffe Metconazol, Pyraclostrobin, Epoxiconazol oder Prochloraz, insbesondere Pyraclostrobin, Epoxiconazol oder Prochloraz. In einer weiteren Ausführungsform sind die Wirkstoffe Metconazol, Pyraclostrobin, Epoxiconazol, Prochloraz, Triticonazol, Boscalid, 3-Difluormethyl-1-methyl-1H-pyrazol-4-carbonsäure (3',4',5'-trifluorbiphenyl-2-yl)-amid oder Metalaxyl geeignet. Besonders bevorzugt sind die beiden agrochemischen Wirkstoffe Pyraclostrobin und Epoxiconazol, oder Pyraclostrobin und Prochloraz. In einer weiteren Ausführungsform sind die beiden agrochemischen Wirkstoffe besonders bevorzugt Pyraclostrobin und Prochloraz, Prochloraz und Triticonazol, Pyraclostrobin und Metconazol, Pyraclostrobin und Boscalid, Pyraclostrobin und Metalaxyl, Triticonazol und Epoxiconazol, Triticonazol und Metalaxyl, Epoxiconazol und Metconazol, Epoxiconazol und Boscalid, 3-Difluormethyl-1-methyl-1H-pyrazol-4-carbonsäure (3',4',5'-trifluorbiphenyl-2-yl)-amid und Triticonazol, 3-Difluormethyl-1-methyl-1H-pyrazol-4-carbonsäure (3',4',5'-trifluorbiphenyl-2-yl)-amid und Metconazol, oder Pyraclostrobin, Metalaxyl und Triticonazol. Der kristallisationsinhibierende agrochemische Wirkstoff liegt im Allgemeinen jeweils zu mindestens 5 Gew.%, bevorzugt zu mindestens 10 Gew.% bezogen auf die Gesamtwirkstoffmenge vor. Meist enthalten die Partikel höchstens 5 Gew.% polymere Kristallisationsinhibitoren, bezogen auf die Gesamtmenge der agrochemischen Wirkstoffe.

Ein weiterer Gegenstand der Erfindung sind Partikel, welche zwei agrochemischen Wirkstoffe in amorpher Form enthalten und welche erhältlich sind nach dem erfindungsgemäßen Verfahren, wobei mindestens einer der agrochemischen Wirkstoffe Metconazol, Pyraclostrobin, Epoxiconazol oder Prochloraz ist. In einer weiteren Ausführungsform ist mindestens einer der agrochemischen Wirkstoffe Metconazol, Pyraclostrobin, Epoxiconazol, Prochloraz, Triticonazol, Boscalid, 3-Difluormethyl-1-methyl-1H-pyrazol-4-carbonsäure (3',4',5'-trifluorbiphenyl-2-yl)-amid oder Metalaxyl. Geeignete Ausführungsformen des Herstellverfahrens, der Partikel und der agrochemischen Wirkstoffe sind wie vorstehend beschrieben. Bevorzugt sind die agrochemischen Wirkstoffe Pyraclostrobin und Epoxiconazol, oder Pyraclostrobin und Prochloraz. Bevorzugt liegen Pyraclostrobin und Epoxiconazol im Gewichtsverhältnis 5: 95 bis 95:5, insbesondere 10 : 90 bis 90 : 10 und speziell 50 : 50 bis 90 : 10, oder Pyraclostrobin und Prochloraz im Gewichtsverhältnis 5: 95 bis 95:5, insbesondere 10 : 90 bis 90 : 10 und speziell 50 : 50 bis 70 : 30 vor.

Ein weiterer Gegenstand der Erfindung sind Partikel, welche zwei agrochemischen Wirkstoffe in amorpher Form enthalten, wobei die beiden agrochemischen Wirkstoffe Pyraclostrobin und Epoxiconazol, oder Pyraclostrobin und Prochloraz sind. Geeignete Ausführungsformen des Herstellverfahrens, der Partikel und der agrochemischen Wirkstoffe sind wie vorstehend beschrieben. Bevorzugt liegen Pyraclostrobin und Epoxiconazol im Gewichtsverhältnis 5: 95 bis 95:5, insbesondere 10 : 90 bis 90 : 10 und speziell 50 : 50 bis 90 : 10, oder Pyraclostrobin und Prochloraz im Gewichtsverhältnis 5: 95 bis 95:5, insbesondere 10 : 90 bis 90 : 10 und speziell 50 : 50 bis 70 : 30 vor. Die vorgenannten Partikel sind beispielsweise erhältlich durch das erfindungsgemäße Verfahren. In einer weiteren Ausführungsform sind beiden agrochemischen Wirkstoffe Pyraclostrobin und Prochloraz, Prochloraz und Triticonazol, Pyraclostrobin und Metconazol, Pyraclostrobin und Boscalid, Pyraclostrobin und Metalaxyl, Triticonazol und Epoxiconazol, Triticonazol und Metalaxyl, Epoxiconazol und Metconazol, Epoxiconazol und Boscalid, 3-Difluormethyl-1-methyl-1H-pyrazol-4-carbonsäure (3',4',5'-trifluorbiphenyl-2-yl)-amid und Triticonazol, 3-Difluormethyl-1-methyl-1H-pyrazol-4-carbonsäure (3',4',5'-trifluorbiphenyl-2-yl)-amid und Metconazol, oder Pyraclostrobin, Metalaxyl und Triticonazol. Besonders bevorzugt sind die beiden agrochemischen Wirkstoffe Pyraclostrobin und Prochloraz, Prochloraz und Triticonazol, oder Pyraclostrobin und Metalaxyl. Die Partikel enthalten meist höchstens 5 Gew.% polymere Kristallisationsinhibitoren, bezogen auf die Gesamtmenge der agrochemischen Wirkstoffe. Eine weitere Ausführungsform sind Partikel, welche zwei agrochemischen Wirkstoffe in amorpher Form enthalten, wobei die beiden agrochemischen Wirkstoffe Pyraclostrobin und Epoxiconazol sind, und die Partikel höchstens 5 Gew.% polymere Kristallisationsinhibitoren, bezogen auf die Gesamtmenge der agrochemischen Wirkstoffe, enthalten.

Ein weiterer Gegenstand betrifft eine agrochemische Formulierung umfassend die Partikel hergestellt nach dem erfindungsgemäßen Verfahren oder die erfindungsgemäßen Partikel, und optional weitere Formulierungshilfsmittel. Geeignete Ausführungsformen des Herstellverfahrens, der Formulierungshilfsmittel, der Partikel und der agrochemischen Wirkstoffe sind wie vorstehend beschrieben. Bevorzugt ist die agrochemische Formulierung eine Suspension (Suspensionskonzentrat SC, Öldispersion OD, fließfähiges Konzentrat für Saatgutbehandlung FS), eine Suspoemulsion (SE), ein Granulat (Granulat GR, Feingranulat FG, Makrogranulat GG, Mikrogranulat MG), ein Staub (zerstäubbares Pulver DP, Pulver für Saatgutbehandlung DS) oder ein wasserdispergierbares Pulver (benetzbares Pulver WP, wasserlösliches Pulver SP, wasserlösliches Pulver für Saatgutbehandlung SS, wasserdispergierbares Pulver für Saatgutbehandlung mit Aufschlämmung WS), besonders bevorzugt eine Suspension oder eine Suspoemulsion und speziell eine Suspension.

Zur Anwendung kann die agrochemische Formulierung mit Wasser, anderen üblichen Flüssigkeiten oder deren wässerigen Mischungen verdünnt werden. Die Verdünnung und Aufwandmenge wird von verschiedenen Faktoren abhängen, wie dem eingesetzten Gerätetyp, dem Verfahren und der Häufigkeit der gewünschten Aufbringung. Es kann wünschenswert sein, ein oder mehrere Formulierungshilfsmittel in den Sprühtank aufzunehmen. Ebenso kann die agrochemische Formulierung mit Düngermaterialien vor deren Aufbringen gemischt werden. Die agrochemische Formulierung kann als einziges Pestizidmittel genutzt werden oder zusammen mit anderen Pestizidmitteln, wie Mikrobioziden, Fungiziden, Herbiziden, Insektiziden, Akariziden und dergleichen.

Weiterhin beansprucht die vorliegende Erfindung ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man eine erfindungsgemäße agrochemische Formulierung auf die jeweiligen Schädlinge (d.h. phytopathogenen Pilze und/oder unerwünschte Insekten oder Milben), deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

Ebenfalls beansprucht die vorliegende Erfindung ein Verfahren zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit einer erfindungsgemäßen agrochemischen Formulierung behandelt.

Die erfindungsgemäße agrochemische Formulierung kann zur Behandlung, bevorzugt zur Beizung von Saatgut verwendet werden. Unter dem Begriff Beize werden alle dem Fachmann bekannten Saatgutbehandlungstechniken umfasst (z.B. "seed dressing", "seed coating" und "pelleting"). Wenn das Saatgut mit der agrochemische Formulierung behandelt oder gebeizt wurde, bedeutet dies, dass die agrochemische Formulierung auf der Oberfläche des Saatguts haftet oder in das Saatgut eingedrungen ist. Der Begriff Saatgut umfasst Saatgut aller Arten, wie z.B. Körner, Samen, Früchte, Knollen, Stecklinge und ähnliche Formen. Als Saatgut kann auch das Saatgut transgener oder durch herkömmliche Züchtungsmethoden erhaltener Pflanzen eingesetzt werden. Bevorzugt beschreibt der Begriff Saatgut hier Körner und Samen.

Die erfindungsgemäßen Partikel haben einen hohen Anteil an Wirkstoffen, sie sind lagerstabil, insbesondere in Form von Suspensionen (beispielsweise bilden sich praktisch keine Kristalle während der Lagerung), sie haben eine hohe biologische Wirksamkeit und sie sind sehr gut bioverfügbar. Das erfindungsgemäße Herstellverfahren ermöglicht die Herstellung dieser vorteilhaften Partikel. Es ermöglicht, höher schmelzenden Wirkstoff(e) bei Temperaturen zu emulgieren, die deutlich unter der Schmelztemperatur/dem Schmelzbereich des höher schmelzenden Wirkstoffs bzw. der höher schmelzenden Wirkstoffe als Reinstoff(e) liegen. Dies hat einerseits den Vorteil, dass die thermische Belastung des Wirkstoffes und damit die Gefahr einer Produktschädigung geringer ist. Andererseits muss weniger Energie zum Aufheizen des Wirkstoffes und zum Abkühlen der Feinemulsion aufgewendet werden. Weiterer Vorteil ist, dass die Suspension von Wirkstoffen stabil ist ohne dass ein aufwendiger Trocknungsschritt notwendig ist. Des weiteren ist es von Vorteil, dass das Herstellverfahren und die Partikel ohne Zusatz teurer oder aufwendig zu synthetisierender polymerer Kristallisationsinhibitoren oder polymerer Umhüllungsschichten auskommt.

Nachfolgende Beispiele erläutern die Erfindung.

### Beispiele

### Einsatzstoffe

Emulgator 1: wässrige Dispersion eines amphiphilen Copolymers aus den Monomeren Acrylsäure, Butylmethacrylat, Methylmethacrylat, Hydroxyethylmethacrylat und iso-Butylmethacrylat mit Feststoffgehalt von 33 Gew.% und Polymerpartikelgröße von etwa 10 bis 60 Nanometern.
Emulgator 2: Natriumdodecylsulfat (SDS)
Emulgator 3: Poly(ethylenglykol-block-propylenglykol-block-ethylenglykol), wobei der Propylenglykol-Block eine molare Masse von 3250 g/mol hat und das Polymer ein Masse von etwa 6500 g/mol (kommerziell erhältlich, z. B. als Pluronic® PE 10500)
Emulgator 4: nichtionischer Emulgator auf Basis von Inulin aus Zichorie mit aufgepfropften Laurylgruppen (kommerziell erhältlich, z. B. als Inutec® SP1).
Emulgator 5: Natriumdioctylsulphosuccinat, 60 % Lösung in einer Wasser/Neopentylglykol Mischung (kommerziell erhältlich, z. B. als Lutensit® A-BO)
Emulgator 6: Kammpolymer von Methylmethacrylat, Methacrylsäure und (Methoxypolyethylenglykol)methacrylat, 33% Lösung in 1:1 Mischung Propylenglykol/Wasser (kommerziell erhältlich, z. B. als Atlox® 4913 von Uniqema).
Emulgator 7: Ethoxyliertes Tristyrylphenolsulfat (Ammoniumsalz, mit etwa 16 Ethylenoxidgruppen pro Molekül; Schmelzpunkt ca 15 °C; kommerziell erhältlich, z. B. als Soprophor® 4D384 von Rhodia).
Emulgator 8: Acrylsäure-Maleinsäure-Copolymerisat, Natriumsalz, teilweise neutralisiert (mittlere molare Masse 70.000 g/mol; K-Wert 60 bestimmt nach DIN ISO 1628-1 bei 1% Trockensubstanz in dest. Wasser, pH 7; kommerziell erhältlich, z. B. als Sokalan CP45 von BASF).
Emulgator 9: Natriumsalz eines Phenolsulfonsäure-Formaldehyd Kondensationsprodukts (kommerziell erhältlich als Wettol® D1 von BASF). Emulgator 10: Ein Laurylcarbamat substituiertes Inulin, das durch Reaktion eines Isocyanates mit Inulin in Gegenwart eines basischen Katalysators hergestellt wurde (kommerziell erhältlich als Inutec® SP1 von Orafti, Ghent oder NRC Nordmann, Rassmann).

| | |
|---|---|
| Pyraclostrobin: | Schmp. 64-65 °C, Löslichkeit in Wasser bei 20 °C: 1.9 mg/l |
| Epoxiconazol: | Schmp. 136 °C, Löslichkeit in Wasser bei 20 °C: 66 mg/l |
| Prochloraz: | Schmp. 47-49 °C, Löslichkeit in Wasser bei 25 °C: 34 mg/l |
| Metalaxyl: | Schmp. 64-72 °C, Löslichkeit in Wasser bei 22 °C: 8,4 g/l |
| Triticonazol: | Schmp. 139-141 °C, Löslichkeit in Wasser bei 20 °C: 9 mg/l |
| Metconazol: | Schmp. 100-108 °C, Löslichkeit in Wasser bei 20 °C: 30 mg/l |
| Boscalid: | Schmp. 143-144 °C, Löslichkeit in Wasser bei 20 °C: 5 mg/l |
| Fungizid A: | 3-Difluormethyl-1-methyl-1H-pyrazol-4-carbonsäure (3',4',5'-trifluorbiphenyl-2-yl)-amid, Schmp. 155-158 °C, herstellbar wie in WO2009/007344 beschrieben. |

### Beispiel 1A: Kristallisationsinhibierende Wirkstoffmischungen

### a) Mischung Pyraclostrobin und Epoxiconazol

In einer Versuchsreihe wurde das Gewichtsverhältnis von Pyraclostrobin und Epoxiconazol variiert von 5:7, 3:7 und 3:8. Dazu wurden die pulverförmigen Wirkstoffe miteinander vermischt und durch Erwärmen über den Schmelzpunkt der Mischung auf 80-90 °C unter Rühren in eine homogene Schmelze überführt. Die Schmelze wurde bei 20 °C zum Abkühlen stehen gelassen. Nach Abkühlen der Schmelze auf 20 °C wurde mit Hilfe eines Lichtmikroskopes festgestellt, ob die Schmelze homogen ist oder Kristalle enthält. Die Mischung aus 5 Gewichtsteilen Pyralostrobin und 7 Gewichtsteilen Epoxiconazol (entspricht einem Verhältnis von 42:58) enthielt eine Stunde nach Abkühlen Kristalle. Die Mischung aus 8 Teilen Pyralostrobin und 3 Teilen Epoxiconazol (entspricht einem Verhältnis von 73:27) enthielt eine Stunde nach Abkühlen keine Kristalle.

### b) Mischung Prochloraz und Pyraclostrobin

Das Gewichtsverhältnis von pulverförmigem Pyraclostrobin und von im Mörser pulverisiertem Prochloraz wurde variiert von 1:9 bis 9:1. Dazu wurden die beiden Wirkstoffe in gemischt und bei 70 °C aufgeschmolzen. Duch vorsichtiges Schütteln wurde die Probe homogenisiert und eine Probe entnommen. Die Proben im Bereich von Prochloraz / Pyraclostrobin 9:1 bis 1:9 waren 1 h nach dem Abkühlen nicht kristallisiert, wie mittels DSC Messung festgestellt wurde. Nach 6 Tagen war die Probe mit dem Gewichtsverhältnis 9:1 durchkristallisiert, während die anderen Proben nur teilweise oder gar nicht kristallisiert waren.

### Beispiel 1B: Kristallisationsinhibierende Wirkstoffmischungen

Die Wirkstoffe wurden in Aceton gelöst (siehe Tabelle 1) und den Mischungsverhältnissen (Tabelle 2) entsprechend kombiniert. Das Aceton wurde in zwei Tagen bei Raumtemperatur abgedampft und dann 5 h bei 80°C unter Vakkuum abgezogen (Methode A). Temperaturunempfindliche Wirkstoffe wurden anschließend zusätzlich15 h bei 140°C aufgeschmolzen (Methode B). Die Proben wurden jeweils auf 20 °C abgekühlt und eine Woche bei 20 °C gelagert. Die Proben blieben klar durchsichtig (d.h. amorph) und zeigten keine Kristalle.

**Tabelle 1**

| Wirkstoff | Gehalt (%) |
|---|---|
| Prochloraz | 50 |
| Pyraclostrobin | 50 |
| Triticinazol | 10 |
| Epoxiconazol | 15 |
| Metconazol | 30 |
| Boscalid | 10 |
| Fungizid A | 30 |
| Metalaxyl | 50 |

**Tabelle 2**

| Wirkstoff 1 | Wirkstoff 2 | Gew.-Verhältnis | Lagerung | Kristallbildung |
|---|---|---|---|---|
| Triticonazol | - | 100 | B | Ja |
| Epoxiconazol | - | 100 | B | Ja |
| Boscalid | - | 100 | B | Ja |
| Fungizid A | - | 100 | B | Ja |
| Metalaxyl | - | 100 | A | Ja |
| Prochloraz | Triticonazol | 80:20 | A | Nein |
| Pyraclostrobin | Metconazol | 80:20 | A | Nein |
| Pyraclostrobin | Metconazol | 60:40 | A | Nein |
| Pyraclostrobin | Metconazol | 40:60 | A | Nein |
| Pyraclostrobin | Boscalid | 80:20 | A | Nein |
| Pyraclostrobin | Metalaxyl | 80:20 | A | Nein |
| Pyraclostrobin | Metalaxyl | 60:40 | A | Nein |
| Pyraclostrobin | Metalaxyl | 40:60 | A | Nein |
| Pyraclostrobin | Metalaxyl + Triticonazol | 20:60:20^{a)} | A | Nein |
| Triticonazol | Epoxiconazol | 60:40 | B | Nein |
| Triticonazol | Epoxiconazol | 40:60 | B | Nein |
| Triticonazol | Fungizid A | 60:40 | B | Nein |
| Triticonazol | Metalaxyl | 20:80 | B | Nein |
| Epoxiconazol | Metconazol | 40:60 | B | Nein |
| Epoxiconazol | Metconazol | 20:80 | B | Nein |
| Epoxiconazol | Boscalid | 40:60 | B | Nein |
| Metconazol | Fungizid A | 80:20 | B | Nein |
| Metconazol | Fungizid A | 60:40 | B | Nein |

| | | | | |
|---|---|---|---|---|
| a) Mischung aus 20:60:20 von Pyraclostrobin:Metalaxyl:Triticonazol | | | | |

### Beispiel 2: Wirkstoffmischung Pyraclostrobin und Epoxiconazol

8 Gewichtsteile pulverförmiges Pyraclostrobin und 3 Gewichtsteile pulverförmiges Epoxiconazol wurden in einem Rührbehälter auf Temperaturen von 80 bis 90°C erhitzt und dabei aufgeschmolzen. Die Mischung wurde so lange gerührt, bis eine transparente, einphasige Flüssigkeit vorliegt. In einem zweiten Behälter wurde die kontinuierliche Phase, bestehend aus 59 Teilen Wasser und 30 Teilen Emulgator 1, angesetzt und ebenfalls auf 80 bis 90°C erhitzt. Nun wurde die Schmelzemischung in die kontinuierliche Phase gegeben und mit Hilfe eines Rührorganes vom Typ Ultraturrax® T 25 auf Stufe 6 bei 24000 Umdrehungen/Minute für 2 Minuten eindispergiert. Die auf diese Weise hergestellte Rohemulsion wurde bei einer Temperatur von ca. 85 °C in einem Hochdruckhomogenisator (Hochdruckpumpe G 400, Firma Maximator GmbH, D-99734 Nordhausen) bei einem Homogenisierdruck von 2000 bar weiterverarbeitet. Man erhielt eine Feinemulsion, die direkt nach dem Homogenisieren in einem Eiswasserbad unter Rühren mit einer Abkühlrate von 3,0 K/min auf Temperaturen kleiner oder gleich 20°C abgekühlt wurde.

Charakteristische Kennwerte der Partikelgrößenverteilung wurden mittels Laserlichtbeugung bestimmt und betragen:
x₁₀=0,413 µm
x₅₀=0,851 µm
x₉₀=1,701 µm
x_{3,2}=0,736 µm
Für die Charakterisierung der Partikelgrößenverteilung der elfprozentigen Formulierung von Epoxiconazol und Pyraclostrobin wurde ein Mastersizer 2000 Laserbeugungsspektrometer von Firma Malvern Instruments GmbH (Herrenberg, Deutschland) verwendet. Für die Messungen wurden 1,5 ml der Originalsuspension in 50 ml vollentsalztes (VE-) Wasser mit einem Magnetrührer eingerührt. Aus dieser verdünnten Probe wurden 3 ml entnommen und zu 125 ml VE-Wasser in die Hydro S-Zelle des Messgerätes bei einer Rührerdrehzahl von 250 Umdrehungen pro Minute gegeben. Die Wirkstoffsuspensionsprobe und das zur Verdünnung verwendete VE-Wasser hatten Raumtemperatur.

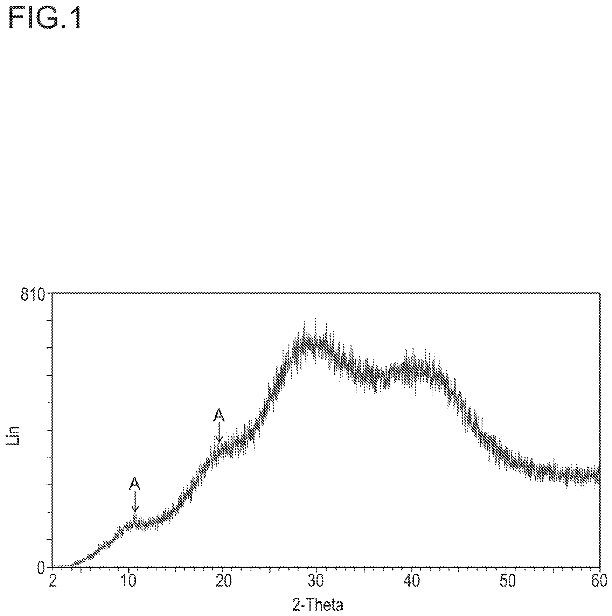

Zur Untersuchung auf kristalline Bestandteile wurde eine Probe mittels Röntgenpulverdiffraktometrie (XRD) untersucht. Die Probe wurde dazu in einen Präparateträger eingefüllt, mit Styroflexfolie überzogen und mit einem Diffraktometer D 5000 analysiert (bei 25 °C; 0,020° Schritte; 4,8 s Schrittzeit; Cu Anode) . Wie das Röntgendiffraktogram in Figur 1 zeigt, war die Probe röntgenamorph. Die Signale A stammen von der Styroflexfolie.

### Beispiel 3: Wirkstoffmischung Pyraclostrobin und Epoxiconazol

8 Gewichtsteile pulverförmiges Pyraclostrobin und 3 Gewichtsteilen pulverförmiges Epoxiconazol wurden in einem Rührbehälter auf Temperaturen von 80 bis 90°C erhitzt und dabei aufgeschmolzen. Die Mischung wurde so lange gerührt, bis eine transparente, einphasige Flüssigkeit vorlag. In einem zweiten Behälter wurde die kontinuierliche Phase, bestehend aus 84,5 Gewichtsteilen Wasser, 3 Gewichtsteilen Emulgator 2 und 1,5 Gewichtsteilen Emulgator 3 angesetzt und ebenfalls auf 80 bis 90°C erhitzt. Nun wurde die Schmelzemischung in die kontinuierliche Phase gegeben und mit Hilfe eines Rührorganes vom Typ Ultraturrax T 25 auf Stufe 6 bei 24000 Umdrehungen/Minute für 2 Minuten eindispergiert. Die auf diese Weise hergestellte Rohemulsion wurde bei einer Temperatur von ca. 85 °C in einem Hochdruckhomogenisator (Hochdruckpumpe G 400, Firma Maximator GmbH, D-99734 Nordhausen) bei einem Homogenisierdruck von 2000 bar weiterverarbeitet. Man erhielt eine Feinemulsion, die direkt nach dem Homogenisieren in einem Eiswasserbad unter Rühren mit einer Abkühlrate von 3,0 K/min auf Temperaturen kleiner oder gleich 20°C abgekühlt wurde.

Charakteristische Kennwerte der Partikelgrößenverteilung wurden mittels Laserlichtbeugung (gemessen mit Malvern Mastersizer 2000, Methode siehe Beispiel 2) bestimmt und betragen:
x₁₀=0,525 µm
x₅₀=1,000 µm
x₉₀=1,852 µm
X_{3,2}=0,888 µm

### Beispiel 4: Wirkstoffmischung Pyraclostrobin und Epoxiconazol

8 Teile pulverförmiges Pyraclostrobin und 3 Teile pulverförmiges Epoxiconazol werden in einem Rührbehälter auf Temperaturen von 80 bis 90°C erhitzt und dabei aufgeschmolzen. Die Mischung wird so lange gerührt, bis eine transparente, einphasige Flüssigkeit vorliegt. In einem zweiten Behälter wird die kontinuierliche Phase, bestehend aus 81,5 Teilen Wasser, 3 Teilen Emulgator 2, 3 Teilen Emulgator 4 und 1,5 Teilen Emulgator 3 angesetzt und ebenfalls auf 80 bis 90°C erhitzt. Nun wird die Schmelzemischung in die kontinuierliche Phase gegeben und mit Hilfe eines Rührorganes vom Typ Ultraturrax T 25 auf Stufe 6 bei 24000 Umdrehungen/Minute für 2 Minuten eindispergiert. Die auf diese Weise hergestellte Rohemulsion wird bei einer Temperatur von ca. 85 °C in einem Hochdruckhomogenisator (Hochdruckpumpe G 400, Firma Maximator GmbH, D-99734 Nordhausen) bei einem Homogenisierdruck von 2000 bar weiterverarbeitet. Man erhält eine Feinemulsion, die direkt nach dem Homogenisieren in einem Eiswasserbad unter Rühren mit einer Abkühlrate von 3,0 K/min auf Temperaturen kleiner oder gleich 20°C abgekühlt wird.

Charakteristische Kennwerte der Partikelgrößenverteilung wurden mittels Laserlichtbeugung (gemessen mit Malvern Mastersizer 2000, Methode siehe Beispiel 2) bestimmt und betragen:
x₁₀=0,356 µm
x₅₀=0,831 µm
x₉₀=2,378 µm
x_{3,2}=0,701 µm

### Beispiel 5: Wirkstoffmischung Prochloraz und Pyraclostrobin

Eine Schmelze von 4 Gewichtsteilen Prochloraz und einem Gewichtsteilen Pyraclostrobin wurde hergestellt bei 65 °C und mittels einer Ultraschalllanze (30 s bei 65°C mit 100% Leistung, Energieeintrag 400 W/ml) mit einer Konzentration von 20 Gew% in einer Wasser/Glycerin Mischung (85/15) in Anwesenheit einer Emulgatormischung emulgiert. Nach Abkühlen auf Raumtemperatur der Emulsion erhält man eine Suspension amorpher Partikel, wobei der Wirkstoffgehalt 20 Gew.% bezogen auf die Suspension beträgt.

Folgende Emulgatormischungen wurden eingesetzt (Gew.% jeweils bzgl. Gesamtansatz):
Ansatz A) 4 Gew.% Emulgator 5 und Emulgator 6 im Gewichtsverhältnis 3 / 1
Ansatz B) 20 Gew.% Emulgator 1
Ansatz C) 6 Gew.% Emulgator 8

Alle drei Ansätze bildeten Suspensionen, die mindestens sieben Wochen stabil waren. Die optische Beurteilung der Suspension erfolgte sofort nach der Herstellung. Die Teilchengrößeverteilung wurde nach 4 Wochen Lagerung bestimmt.

| Ansatz | optische Beurteilung | Teilchengrößenverteilung [µm] | | | |
|---|---|---|---|---|---|
| | | d10 | d50 | d90 | Mean |
| A | homogen | 0,98 | 1,69 | 6,37 | 2,65 |
| B | homogen | 0,07 | 0,09 | 1,44 | 0,53 |
| C | homogen | 0,66 | 1,53 | 4,86 | 2,14 |

### Beispiel 6: Wirkstoffmischung Prochloraz und Pyraclostrobin

Die Schmelzemulgierung wurde wie in Beispiel 5 mit Emulgator b) wiederholt, wobei die Konzentration der Wirkstoffmischung und des Emulgators wie folgt variiert wurde:

| Ansatz | A | B | C | D | E |
|---|---|---|---|---|---|
| Konzentration Emulgator b) [Gew.%] | 20 | 20 | 20 | 10 | 6 |
| Konzentration Wirkstoffmischung [Gew.%] | 20 | 10 | 6 | 20 | 20 |

Die Teilchengrößen waren mit statischer Lichstreuung nicht messbar und lagen direkt nach der Herstellung unterhalb von 1µm. Mit abnehmendem Wirkstoff/Dispergiermittel-Verhältnis wurden die hergestellten Dispersionen zunehmend opaq. Die Proben mit 20 Gew.% Wirkstoff waren milchig weiß und sedimentierten nach spätestens drei Wochen. Alle Proben waren nach mehr als 10 Wochen Lagerung bei Raumtemperatur noch stabil, zwar sedimentiert aber redispergierbar. Ein starkes Teilchenwachstum war nicht zu verzeichnen, und unter dem Mikroskop waren keine Kristalle zu erkennen.

### Beispiel 7: Pyraclostrobin (Vergleichsversuch; nicht erfindungsgemäß)

Die Schmelzemulgierung wurde wie in Beispiel 6 mit Emulgator b) wiederholt, wobei statt der Wirkstoffmischung nur Pyraclostrobin verwendet wurde. Die Konzentration von Pyraclostrobin und des Emulgators wurde wie folgt variiert wurde:

| Ansatz | A | B | C |
|---|---|---|---|
| Konzentration Emulgator b) [Gew.%] | 20 | 20 | 20 |
| Konzentration Wirkstoff [Gew.%] | 20 | 10 | 6 |

Die Proben waren schon nach einem Tag sedimentiert und nicht mehr redispergierbar.

Kristalle waren schon mit bloßem Auge zu erkennen.

### Beispiel 8: Wirkstoffmischung Pyraclostrobin und Prochloraz

Unter Rühren wurde 80 g Prochloraz, 20 g Pyraclostrobin, 15 g Emulgator 5, 5 g Emulgator 6, 57 g Glycerin, 50 g einer 2 Gew%-igen wässerigen Lösung von Xanthan in 273 g Wasser auf 65 °C erhitzt. Die Rohemulsion mit den geschmolzenen Wirkstoffen wurde mit einem Inline-Dissolver (Megatron MT 3000 der Fa. Kinematica AG) bei 15000 U/min geschert. Nach 30 min wurde die Partikelgröße in der Feinemulsion mit einem Malvern Mastersizer 2000 analysiert (x₉₀ = 1,7 µm) und die Emulsion anschließend im Eisbad unter leichtem Rühren auf abgekühlt. Es enstand eine Suspension fester, amorpher Partikel.

Eine Nasssiebung über 150 µm Sieb zeigte keinen Rückstand. Die Probe war über 4 Wochen stabil. Es zeigte sich kein signifikantes Wachstum der Partikelgröße.

### Beispiel 9: Wirkstoffmischung Pyraclostrobin und Prochloraz

Das Verfahren aus Beispiel 8 wurde wiederholt, wobei zur Scherung anstelle des Inline-Dissovers nun ein Ultraturrax (Polytron PT 4000 der Fa. Kinematica AG) für 30 min bei 15000 U/min verwendet wurde. Man erhielt eine Partikelgröße von x₉₀ = 1,6 µm. Die Probe war über 4 Wochen stabil. Es zeigte sich kein signifikantes Wachstum der Partikelgröße.

### Beispiel 10: Wirkstoffmischung Pyraclostrobin und Prochloraz

Das Verfahren aus Beispiel 8 wurde wiederholt, wobei anstelle von Emulgator 5 nun Emulgator 7 in der gleichen Menge eingesetzt und zur Scherung anstelle des Inline-Dissovers nun ein Ultraturrax (Polytron PT 4000 der Fa. Kinematica AG) für 10 min bei 15000 U/min verwendet wurde. Man erhielt eine Partikelgröße von x₉₀ = 3,0 µm. Die Probe war über 4 Wochen stabil. Es zeigte sich kein signifikantes Wachstum der Partikelgröße.

### Beispiel 11: Wirkstoffmischung Pyraclostrobin und Prochloraz

Das Verfahren aus Beispiel 8 wurde wiederholt, wobei anstelle von Emulgator 6 nun Emulgator 3 in der gleichen Menge eingesetzt und zur Scherung anstelle des Inline-Dissovers nun ein Ultraturrax (Polytron PT 4000 der Fa. Kinematica AG) für 10 min bei 15000 U/min verwendet wurde. Man erhielt eine Partikelgröße von x₉₀ = 1,5 µm. Die Probe war über 4 Wochen stabil. Es zeigte sich kein signifikantes Wachstum der Partikelgröße.

### Beispiel 12: Wirkstoffmischung Pyraclostrobin und Metalaxyl

Das Verfahren wurde entsprechend Beispiel 2 durchgeführt. Die Wirkstoffmischung bestand aus 6 Gewichtsteilen Pyraclostrobin und 4 Gewichtsteilen Metalaxyl. Zur Emulgierung wurden 60 Gewichtsteile Wasser und 30 Gewichtsteile Emulgator 1 eingesetzt. Die Partikelgrößenverteilung lag bei x₁₀=0,337 µm, x₅₀=0,793 µm und x₉₀=1,726 µm. Nach vier Tagen Lagerung lagen die Werte bei x₁₀=0,369 µm, x₅₀=0,720 µm und x₉₀=1,385 µm. Unter dem Lichtmikroskop waren keine Kristalle zu erkennen.

### Beispiel 13: Wirkstoffmischung Pyraclostrobin und Metalaxyl

Das Verfahren wurde entsprechend Beispiel 2 durchgeführt. Die Wirkstoffmischung bestand aus 6 Gewichtsteilen Pyraclostrobin und 4 Gewichtsteilen Metalaxyl. Zur Emulgierung wurden 80 Gewichtsteile Wasser und 10 Gewichtsteile Emulgator 9 eingesetzt. Die Partikelgrößenverteilung lag bei x₁₀=0,364 µm, x₅₀=0,821 µm und x₉₀=1,890 µm. Nach zwei Tagen Lagerung lagen die Werte bei x₁₀=0,441 µm, x₅₀=1,035 µm und x₉₀=2,676 µm. Unter dem Lichtmikroskop waren keine Kristalle zu erkennen.

### Beispiel 14: Wirkstoffmischung Prochloraz und Triticonazol

Das Verfahren wurde entsprechend Beispiel 2 durchgeführt. Die Wirkstoffmischung bestand aus 8 Gewichtsteilen Procloraz und 2 Gewichtsteilen Triticonazol. Zur Emulgierung wurden eine kontinuierliche Phase aus 59 Gewichtsteile Wasser, 30 Gewichtsteile Dikaliumhydrogenphosphat und 1 Gewichtsteile Emulgator 10 (wobei der Emulgator mit einem Ultraturrax in die wässrige Dikaliumhydrogenphosphat-Lösung ein eindispergiert wurde) eingesetzt. Die Partikelgrößenverteilung lag bei x₁₀=0,349 µm, x₅₀=0,935 µm und x₉₀=4,866 µm. Nach 24 h Lagerung lagen die Werte bei x₁₀=0,360 µm, x₅₀=945 µm und x₉₀=4,508 µm. Unter dem Lichtmikroskop waren keine Kristalle zu erkennen.

## Patentansprüche

1. Verfahren zur Herstellung von Partikeln, welche zwei agrochemische Wirkstoffe in amorpher Form enthalten, bei dem eine Schmelze umfassend die beiden geschmolzenen agrochemischen Wirkstoffe in einer wässerigen Lösung emulgiert und abgekühlt wird,
**dadurch gekennzeichnet, dass** der eine agrochemische Wirkstoff die Kristallisation des anderen agrochemischen Wirkstoffs inhibiert, und wobei der Schmelze höchstens 5 Gew.% polymere Kristallisationsinhibitoren, bezogen auf die Gesamtmenge der agrochemischen Wirkstoffe, zugesetzt werden
wobei die agrochemischen Wirkstoff bei 20 °C in Wasser höchstens 1 Gew.% löslich sind,
wobei der Schmelzpunkt der agrochemischen Wirkstoffe bei mindestens 40 °C liegt, und
wobei die Partikel unverkapselt sind,
wobei die agrochemischen Wirkstoffe Metconazol, Pyraclostrobin, Epoxiconazol, Prochloraz, Triticonazol, Boscalid, 3-Difluormethyl-1-methyl-1H-pyrazol-4-carbonsäure (3',4',5'-trifluorbiphenyl-2-yl)-amid oder Metalaxyl sind.

2. Verfahren nach Anspruch 1, **dadurch gekennzeichnet, dass** die Schmelze mit einer Kühlrate von mindestens 0,5 K/min abgekühlt wird mit Hilfe einer regelbaren Kühlapparatur.

3. Verfahren nach einem der Ansprüche 1 bis 2, **dadurch gekennzeichnet, dass** die Kristallisation inhibierende Wirkung des eines agrochemischen Wirkstoffs auf den anderen agrochemischen Wirkstoff festgestellt wird, indem man
a) die Wirkstoffe miteinander vermischt, durch Erwärmen über den Schmelzpunkt der Mischung in eine homogene Schmelze überführt, und die Schmelze abkühlen läßt; oder
b) die Wirkstoffe separat in einem Lösungsmittels löst, die Wirkstoff-haltigen Lösungen vermischt, und anschließend das Lösungsmittel entfernt;
und anschließend mit Hilfe eines Lichtmikroskopes oder dynamischer Differenzkalorimetrie (DSC) feststellt, ob die erstarrte Schmelze oder die getrocknete Mischung Kristalle enthält.

4. Verfahren nach einem der Ansprüche 1 bis 3, **dadurch gekennzeichnet, dass** die agrochemischen Wirkstoffe Pyraclostrobin und Epoxiconazol, Pyraclostrobin und Prochloraz, Prochloraz und Triticonazol, Pyraclostrobin und Metconazol, Pyraclostrobin und Boscalid, Pyraclostrobin und Metalaxyl, Triticonazol und Epoxiconazol, Triticonazol und Metalaxyl, Epoxiconazol und Metconazol, Epoxiconazol und Boscalid, 3-Difluormethyl-1-methyl-1H-pyrazol-4-carbonsäure (3',4',5'-trifluorbiphenyl-2-yl)-amid und Triticonazol, 3-Difluormethyl-1-methyl-1H-pyrazol-4-carbonsäure (3',4',5'-trifluorbiphenyl-2-yl)-amid und Metconazol, oder Pyraclostrobin, Metalaxyl und Triticonazol umfassen.

5. Partikel, welche zwei agrochemische Wirkstoffe in amorpher Form enthalten, **dadurch gekennzeichnet, dass** die beiden agrochemischen Wirkstoffe Pyraclostrobin und Prochloraz, Prochloraz und Triticonazol, Pyraclostrobin und Metconazol, Pyraclostrobin und Boscalid, Pyraclostrobin und Metalaxyl, Triticonazol und Epoxiconazol, Triticonazol und Metalaxyl, Epoxiconazol und Metconazol, Epoxiconazol und Boscalid, 3-Difluormethyl-1-methyl-1H-pyrazol-4-carbonsäure (3',4',5'-trifluorbiphenyl-2-yl)-amid und Triticonazol, 3-Difluormethyl-1-methyl-1H-pyrazol-4-carbonsäure (3',4',5'-trifluorbiphenyl-2-yl)-amid und Metconazol, oder Pyraclostrobin, Metalaxyl und Triticonazol sind.

6. Partikel nach Anspruch 5, **dadurch gekennzeichnet, dass** die beiden agrochemischen Wirkstoffe Pyraclostrobin und Prochloraz, Prochloraz und Triticonazol oder Pyraclostrobin und Metalaxyl sind.

7. Partikel nach Anspruch 5 oder 6, **dadurch gekennzeichnet, dass** die Partikel höchstens 5 Gew.% polymere Kristallisationsinhibitoren, bezogen auf die Gesamtmenge der agrochemischen Wirkstoffe, enthalten.

8. Partikel, welche zwei agrochemische Wirkstoffe in amorpher Form enthalten, **dadurch gekennzeichnet, dass** die beiden agrochemischen Wirkstoffe Pyraclostrobin und Epoxiconazol sind, und die Partikel höchstens 5 Gew.% polymere Kristallisationsinhibitoren, bezogen auf die Gesamtmenge der agrochemischen Wirkstoffe, enthalten.

9. Agrochemische Formulierung umfassend die Partikel hergestellt gemäß einem der Ansprüche 1 bis 4, oder die Partikel gemäß einem der Ansprüche 5 bis 8, und optional weitere Formulierungshilfsmittel.

10. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, **dadurch gekennzeichnet, dass** man eine agrochemische Formulierung gemäß Anspruch 9 auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

11. Verfahren zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, **dadurch gekennzeichnet, dass** man Saatgüter von Nutzpflanzen mit einer agrochemischen Formulierung gemäß Anspruch 9 behandelt.

12. Saatgut, gebeizt mit einer agrochemischen Formulierung gemäß Anspruch 9, wobei die Formulierung auf der Oberfläche des Saatguts haftet oder in das Saatgut eingedrungen ist.

## Claims

1. A process for the preparation of particles which comprise two agrochemical active ingredients in amorphous form, where a melt comprising the two molten agrochemical active ingredients is emulsified in an aqueous solution and cooled,
wherein the one agrochemical active ingredient inhibits the crystallization of the other agrochemical active ingredient, and where not more than 5% by weight of polymeric crystallization inhibitors, based on the total amount of the agrochemical active ingredients, are added to the melt,
where the agrochemical active ingredients are soluble in water at 20°c to not more than 1% by weight,
where the melting point of the agrochemical active ingredients is at leasts 40°c, and
where the particles are unencapsulated, where the agrochemical active ingredients are metconazole, pyraclostrobin, epoxiconazole, prochloraz, triticonazole, boscalid, N-(3',4',5'-trifluorobiphenyl-2-yl)-3-difluoromethyl-1-methyl-1H-pyrazole-4-carboxamide or metalaxyl.

2. The process according to claim 1, wherein the melt is cooled at a cooling rate of at least 0.5 K/min with the aid of a controllable cooling apparatus.

3. The process according to either of claims 1 to 2, wherein the crystallization-inhibiting activity of the one agrochemical active ingredient on the other agrochemical active ingredient is determined by
a) mixing the active ingredients with each other, converting them into a homogeneous melt by heating above the melting point of the mixture, and allowing the melt to cool, or
b) dissolving the active ingredients separately in a solvent, mixing the active-ingredient-comprising solutions and subsequently removing the solvent;
and, subsequently determining with the aid of a light microscope or dynamic differential scanning calorimetry (DSC) whether the solidified melt or the dried mixture comprises crystals.

4. The process according to any of claims 1 to 3, wherein the agrochemical active ingredients comprise pyraclostrobin and epoxiconazole, pyraclostrobin and prochloraz, prochloraz and triticonazole, pyraclostrobin and metconazole, pyraclostrobin and boscalid, pyraclostrobin and metalaxyl, triticonazole and epoxiconazole, triticonazole and metalaxyl, epoxiconazole and metconazole, epoxiconazole and boscalid, N-(3',4',5'-trifluorobiphenyl-2-yl)-3-difluoromethyl-1-methyl-1H-pyrazole-4-carboxamide and triticonazole, N-(3',4',5'-trifuorobiphenyl-2-yl)-3-difluoromethyl-1-methyl-1H-pyrazole-4-carboxamide and metconazole, or pyraclostrobin, metalaxyl and tritoconazole.

5. A particle which comprises two agrochemical active ingredients in amorphous form, wherein the two agrochemical active ingredients are pyraclostrobin and prochloraz, prochloraz and triticonazole, pyraclostrobin and metconazole, pyraclostrobin and boscalid, pyraclostrobin and metalaxyl, triticonazole and epoxiconazole, triticonazole and metalaxyl, epoxiconazole and metconazole, epoxiconazole and boscalid, N-(3',4',5'-trifluorobiphenyl-2-yl)-3-difluoromethyl-1-methyl-1H-pyrazole-4-carboxamide and triticonazole, N-(3',4',5'-trifluorobiphenyl-2-yl)-3-difluoromethyl-1-methyl-1H-pyrazole-4-carboxamide and metconazole, or pyraclostrobin, metalaxyl and triticonazole.

6. The particle according to claim 5, wherein the two agrochemical active ingredients are pyraclostrobin and prochloraz, prochloraz and triticonazole or pyraclostrobin and metalaxyl.

7. The particle according to claim 5 or 6, which comprises not more than 5% by weight of polymeric crystallization inhibitors, based on the total amount of the agrochemical active ingredients.

8. The particle which comprises two agrochemical active ingredients in amorphous form, wherein the two agrochemical active ingredients are pyraclostrobin and epoxiconazole and the particle comprises not more than 5% by weight of polymeric crystallization inhibitors, based on the total amount of the agrochemical active ingredients.

9. An agrochemical formulation comprising the particles prepared as described in any of claims 1 to 4 or the particles according to any of claims 5 to 8, and optionally further formulation auxiliaries.

10. A method of controlling phytopathogenic fungi and/or undesirable vegetation and/or undesirable attack by insects or mites and/or for regulating plant growth, wherein an agrochemical formulation according to claim 9 is allowed to act on the respective pests, their environment or the plants to be protected from the respective pests, or the soil, and/or on undesirable plants and/or the useful plants and/or their environment.

11. A method of controlling undesirable attack by insects or mites on plants and/or of controlling phytopathogenic fungi and/or of controlling undesirable vegetation, wherein seeds of useful plants are treated with an agrochemical formulation according to claim 9.

12. Seeds dressed with an agrochemical formulation according to claim 9, where the formulation adheres to the surface of the seed or has penetrated into the seed.

## Revendications

1. Procédé de fabrication de particules qui contiennent deux agents actifs agrochimiques sous forme amorphe, selon lequel une masse fondue comprenant les deux agents actifs agrochimiques fondus est émulsifiée dans une solution aqueuse et refroidie,
**caractérisé en ce qu'**un agent actif agrochimique inhibe la cristallisation de l'autre agent actif agrochimique, et au plus 5 % en poids d'inhibiteurs de cristallisation polymères, par rapport à la quantité totale des agents actifs agrochimiques, sont ajoutés à la masse fondue,
les agents actifs agrochimiques étant solubles dans l'eau à 20 °C à hauteur d'au plus 1 % en poids,
le point de fusion des agents actifs agrochimiques étant d'au moins 40 °C, et
les particules n'étant pas encapsulées,
les agents actifs agrochimiques étant le metconazole, la pyraclostrobine, l'époxiconazole, le prochloraz, le triticonazole, le boscalide, le (3',4',5'-trifluorobiphényl-2-yl)-amide de l'acide 3-difluorométhyl-1-méthyl-1H-pyrazole-4-carboxylique ou le métalaxyle.

2. Procédé selon la revendication 1, **caractérisé en ce que** la masse fondue est refroidie à un taux de refroidissement d'au moins 0,5 K/minute à l'aide d'un appareil de refroidissement réglable.

3. Procédé selon l'une quelconque des revendications 1 à 2, **caractérisé en ce que** l'effet d'inhibition de la cristallisation d'un agent actif agrochimique sur l'autre agent actif agrochimique est déterminé :
a) en mélangeant les agents actifs l'un avec l'autre, en les transformant en une masse fondue homogène par chauffage au-dessus du point de fusion du mélange et en laissant refroidir la masse fondue ; ou
b) en dissolvant séparément les agents actifs dans un solvant, en mélangeant les solutions contenant les agents actifs, puis en éliminant le solvant ;
puis en déterminant à l'aide d'un microscope optique ou par calorimétrie différentielle dynamique (DSC) si la masse fondue solidifiée ou le mélange séché contient des cristaux.

4. Procédé selon l'une quelconque des revendications 1 à 3, **caractérisé en ce que** les agents actifs agrochimiques comprennent la pyraclostrobine et l'époxiconazole, la pyraclostrobine et le prochloraz, le prochloraz et le triticonazole, la pyraclostrobine et le metconazol, la pyraclostrobine et le boscalide, la pyraclostrobine et le métalaxyle, le triticonazole et l'époxiconazole, le triticonazole et le métalaxyle, l'époxiconazole et le metconazole, l'époxiconazole et le boscalide, le (3',4',5'-trifluorobiphényl-2-yl)-amide de l'acide 3-difluorométhyl-1-méthyl-1H-pyrazole-4-carboxylique et le triticonazole, le (3',4',5'-trifluorobiphényl-2-yl)-amide de l'acide 3-difluorométhyl-1-méthyl-1H-pyrazole-4-carboxylique et le metconazole, ou la pyraclostrobine, le métalaxyle et le triticonazole.

5. Particules, qui contiennent deux agents actifs agrochimiques sous forme amorphe, **caractérisées en ce que** les deux agents actifs agrochimiques sont la pyraclostrobine et le prochloraz, le prochloraz et le triticonazole, la pyraclostrobine et le metconazole, la pyraclostrobine et le boscalide, la pyraclostrobine et le métalaxyle, le triticonazole et l'époxiconazole, le triticonazole et le métalaxyle, l'époxiconazole et le metconazole, l'époxiconazole et le boscalide, le (3',4',5'-trifluorobiphényl-2-yl)-amide de l'acide 3-difluorométhyl-1-méthyl-1H-pyrazole-4-carboxylique et le triticonazole, le (3',4',5'-trifluorobiphényl-2-yl)-amide de l'acide 3-difluorométhyl-1-méthyl-1H-pyrazole-4-carboxylique et le metconazole, ou la pyraclostrobine, le métalaxyle et le triticonazole.

6. Particules selon la revendication 5, **caractérisées en ce que** les deux agents actifs agrochimiques sont la pyraclostrobine et le prochloraz, le prochloraz et le triticonazole, ou la pyraclostrobine et le métalaxyle.

7. Particules selon la revendication 5 ou 6, **caractérisées en ce que** les particules contiennent au plus 5 % en poids d'inhibiteurs de cristallisation polymères, par rapport à la quantité totale des agents actifs agrochimiques.

8. Particules, qui contiennent deux agents actifs agrochimiques sous forme amorphe, **caractérisées en ce que** les deux agents actifs agrochimiques sont la pyraclostrobine et l'époxiconazole, et les particules contiennent au plus 5 % en poids d'inhibiteurs de cristallisation polymères, par rapport à la quantité totale des agents actifs agrochimiques.

9. Formulation agrochimique comprenant les particules fabriquées selon l'une quelconque des revendications 1 à 4, ou les particules selon l'une quelconque des revendications 5 à 8, et éventuellement d'autres adjuvants de formulation.

10. Procédé de lutte contre des champignons phytopathogènes et/ou une végétation indésirable et/ou une infestation indésirable par des insectes ou des acariens et/ou de régulation de la croissance de plantes, **caractérisé en ce qu'**une formulation agrochimique selon la revendication 9 est laissée agir sur les nuisibles en question, leur habitat ou les plantes à protéger contre les nuisibles en question, le sol et/ou sur les plantes indésirables et/ou les plantes utiles et/ou leur habitat.

11. Procédé de lutte contre une infestation indésirable par des insectes ou des acariens sur des plantes et/ou de lutte contre des champignons phytopathogènes et/ou de lutte contre une végétation indésirable, **caractérisé en ce que** des graines de plantes utiles sont traitées avec une formulation agrochimique selon la revendication 9.

12. Graines, traitées avec une formulation agrochimique selon la revendication 9, la formulation adhérant sur la suface des graines ou pénétrant dans les graines.
